# EUROPEAN PATENT APPLICATION

(11) **EP 4 564 985 A1**
(43) Date of publication of application: **04.06.2025**
(21) Application number: 23849049.4
(22) Date of filing: 09.06.2023
(51) Int. Cl.: H04W 76/00, G06Q 10/087

(54) **COUNTING METHOD AND APPARATUS**

(30) Priority: 04.08.2022 CN 202210933643
(71) Applicant: Huawei Technologies Co., Ltd., Shenzhen, Guangdong 518129 (CN)
(72) Inventor: ZHOU, Xiaoyun, Shenzhen, Guangdong 518129 (CN); ZONG, Zaifeng, Shenzhen, Guangdong 518129 (CN)
(74) Representative: Körber, Martin Hans
(86) International application number: PCT/CN2023/099359
(87) International publication number: WO 2024/027339

(57) **Abstract**

An inventory method and an apparatus are provided. The method includes: A core network element obtains an identifier of a first terminal device and first information, where the first information is used to determine one or more second terminal devices on which an operation is to be performed, the first terminal device is configured to perform the operation on the second terminal device, and the second terminal device is an ambient device; the core network element sends the first information to the first terminal device; and the core network element receives a result of performing the operation by the first terminal device based on the first information. According to the foregoing design, the core network device controls the first terminal device to perform the operation on the second terminal device, to ensure timeliness of inventory on an internet of things terminal when the internet of things terminal moves in a large range.

## Description

### CROSS-REFERENCE TO RELATED APPLICATIONS

This application claims priority to Chinese Patent Application No. 202210933643.6, filed with the China National Intellectual Property Administration on August 4, 2022 and entitled "INVENTORY METHOD AND APPARATUS", which is incorporated herein by reference in its entirety.

### TECHNICAL FIELD

This application relates to the field of communication technologies, and in particular, to an inventory method and an apparatus.

### BACKGROUND

Currently, in passive internet of things (Passive IoT) scenarios, internet of things terminals (for example, a radio frequency identification (radio frequency identification, RFID) apparatus) have a prospect of large-scale deployment and application. For example, in logistics and warehousing scenarios, goods inventory and tracking, and environment and goods status monitoring in a transportation process for high-value goods (such as vaccines) may be performed using the internet of things terminals. For another example, in industrial manufacturing scenarios, environment and device status monitoring may be performed using the internet of things terminals.

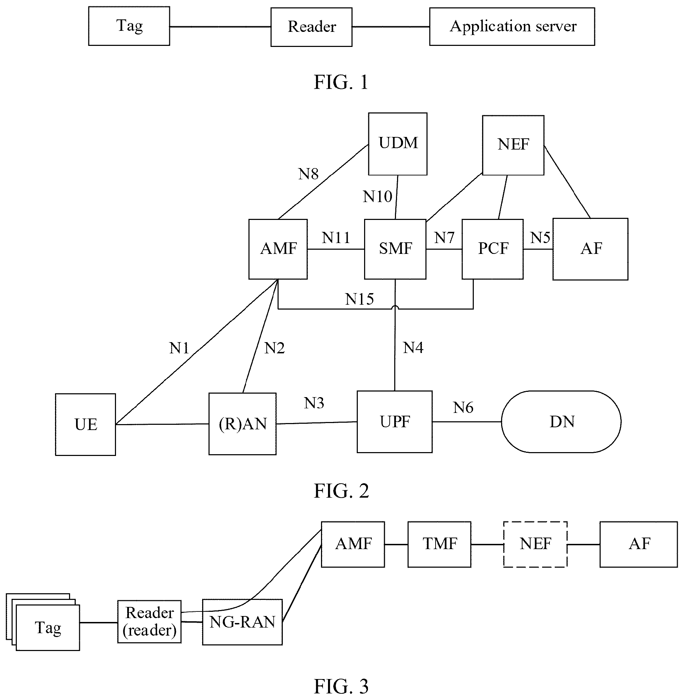

However, a passive or semi-passive internet of things terminal has a simple function, and relies on external excitation to send information, where the excitation is typically from a reader (or a reader/writer). Currently, the reader may perform an operation on the internet of things terminal based on an indication of an application server, as shown in FIG. 1. Because a communication distance between the reader and the internet of things terminal is usually short, inventory can be performed on the internet of things terminal only in a small-range and small-scale scenario.

Particularly, when the internet of things terminal moves in a large range, the reader may be affected by poor signal coverage, affecting timeliness of inventory on the internet of things terminal.

### SUMMARY

Embodiments of this application provide an inventory method and an apparatus, to ensure timeliness of inventory on an internet of things terminal when the internet of things terminal moves in a large range.

According to a first aspect, this application provides an inventory method. The method includes: A core network element obtains an identifier of a first terminal device and first information, where the first information is used to determine one or more second terminal devices on which an operation is to be performed, the first terminal device is configured to perform the operation on the second terminal device, and the second terminal device is an ambient device; the core network element sends the first information to the first terminal device; and the core network element receives a result of performing the operation by the first terminal device based on the first information.

The first terminal device and the second terminal device are terminal devices of different types. For example, the first terminal device is user equipment (user equipment, UE) defined in 3GPP, and the second terminal device is a passive (passive) or semi-passive (semi-passive) device or an ambient (ambient) enabling device.

According to the foregoing design, the first terminal device may register with a 3GPP network, for example, a 4G network, a 5G network, or another future network. Herein, the 5G network is merely used as an example for description. When the first terminal device registers with the 5G network, the core network device may control the first terminal device to perform the operation on the second terminal device, so that inventory can also be performed on an internet of things terminal even if the internet of things terminal moves in a large range and signal coverage of an access network device is poor, thereby implementing continuous signal coverage, and ensuring timeliness of inventory on the internet of things terminal.

In a possible design, when the core network element receives the result of performing the operation by the first terminal device based on the first information, the core network element receives identifiers that are of a part or all of the one or more second terminal devices and that are sent by the first terminal device. In other words, the result that is of performing the operation by the first terminal device based on the first information and that is received by the core network device includes the identifiers of the part or all of the one or more second terminal devices.

In a possible design, the core network element further obtains first indication information, where the first indication information indicates to perform a first operation on the second terminal device; the core network element sends the first indication information to the first terminal device; and the core network element further receives an execution result that is of performing the first operation on the part or all of the one or more second terminal devices and that is sent by the first terminal device.

In other words, the result that is of performing the operation by the first terminal device based on the first information and that is received by the core network device further includes the execution result of performing the first operation on the part or all of the one or more second terminal devices.

It may be understood that the core network device may send the first information and the first indication information to the first terminal device via one message, for example, an N1 message, or the core network device may send the first information and the first indication information to the first terminal device via two messages. This is not limited in this application.

Similarly, the first terminal device may send, to the core network device via one message, for example, an N1 message, the identifiers of the part or all of the one or more second terminal devices and the execution result of performing the first operation on the second terminal device. Alternatively, the first terminal device may send, to the core network device through two messages, the identifiers of the part or all of the one or more second terminal devices and the execution result of performing the first operation on the second terminal device. This is not limited in this application.

In a possible design, the core network element receives an identifier that is of a third terminal device and that is sent by the first terminal device, where the third terminal device belongs to the one or more second terminal devices. The core network element sends second indication information to the first terminal device, where the second indication information indicates at least one of the following content: indicating to complete an operation on the third terminal device, indicating to query a next second terminal device, or indicating to perform a random access procedure.

According to the foregoing design, the core network element may control the first terminal device to perform inventory on the second terminal devices one by one.

In a possible design, the method further includes: The core network element further obtains first indication information, where the first indication information indicates to perform a first operation on the second terminal device. Before the core network element sends the second indication information to the first terminal device, the core network element sends third indication information to the first terminal device, where the third indication information indicates to perform the first operation on the third terminal device; and the core network element receives an execution result that is of performing the first operation on the third terminal device and that is sent by the first terminal device.

According to the foregoing design, the core network element may obtain the first indication information, to indicate the first terminal device to perform the first operation on the third terminal device, and receive, from the first terminal device, the execution result of performing the first operation on the third terminal device.

In a possible design, the core network device is a device management network element. When the core network element sends the first information to the first terminal device, the device management network element determines a first access and mobility management network element based on the identifier of the first terminal device, where the first terminal device registers with the first access and mobility management network element; and the device management network element sends the first information to the first terminal device via the first access and mobility management network element.

The device management network element may be an independent network element. For example, the device management network element may be a tag management network element. Alternatively, the device management network element may be co-deployed with another network element. For example, the device management network element may be co-deployed with a network exposure function network element, or the device management network element may be co-deployed with a unified data management network element.

In a possible design, the device management network element sends a subscription request message to the first access and mobility management network element, where the subscription request message is used to subscribe to the result of performing the operation by the first terminal device based on the first information.

In a possible design, when the core network element receives the result of performing the operation by the first terminal device based on the first information, the device management network element receives a first notification message from the first access and mobility management network element, where the first notification message responds to the subscription request message, and the first notification message includes the result.

In a possible design, the core network element is a first access and mobility management network element.

In a possible design, the first terminal device deregisters from the first access and mobility management network element, and registers with a second access and mobility management network element. After the core network element sends the first information to the first terminal device, the first access and mobility management network element sends the first information to the second access and mobility management network element.

In a possible design, the second access and mobility management network element receives the result that is of performing the operation based on the first information and that is sent by the first terminal device.

It may be understood that, because the first terminal device deregisters from the first access and mobility management network element, the result of performing the operation by the first terminal device based on the first information is no longer sent to the first access and mobility management network element, but is sent to an access and mobility management network element with which the first terminal device currently registers, that is, the second access and mobility management network element.

In a possible design, the first operation is any one or more of the following: a read operation, a write operation, an access operation, a kill operation, a lock operation, a block write operation, or a block erase operation.

According to a second aspect, this application provides an inventory method. The method includes: A first terminal device receives first information from a core network element, where the first information is used to determine one or more second terminal devices on which an operation is to be performed, the first terminal device is configured to perform the operation on the second terminal device, and the second terminal device is an ambient device; the first terminal device determines, based on the first information, a result of performing the operation on the second terminal device; and the first terminal device sends the result to the core network element.

According to the foregoing design, the first terminal device may register with a 3GPP network, for example, a 4G network, a 5G network, or another future network. Only the 5G network is used as an example herein for description. When the first terminal device registers with the 5G network, the first terminal device may perform the operation on the second terminal device based on the first information received from the core network device, so that inventory can also be performed on an internet of things terminal even if the internet of things terminal moves in a large range and signal coverage of an access network device is poor, thereby implementing continuous signal coverage, and ensuring timeliness of inventory on the internet of things terminal.

In a possible design, when the first terminal device sends the result to the core network element, the first terminal device sends identifiers of a part or all of the one or more second terminal devices to the core network element.

In a possible design, the first terminal device receives first indication information from the core network element, where the first indication information indicates to perform a first operation on the second terminal device; the first terminal device performs the first operation on the part or all of the one or more second terminal devices based on the first indication information; and when the first terminal device sends the result to the core network element, the first terminal device sends, to the core network element, an execution result of performing the first operation on the part or all of the one or more second terminal devices.

In a possible design, when the first terminal device sends the result to the core network element, the first terminal device sends an identifier of a third terminal device to the core network element, where the third terminal device belongs to the one or more second terminal devices; and the first terminal device receives second indication information from the core network element, where the second indication information indicates at least one of the following content: indicating to complete an operation on the third terminal device, indicating to query a next second terminal device, or indicating to perform a random access procedure.

In a possible design, before the first terminal device receives the second indication information from the core network element, the first terminal device receives third indication information from the core network element, where the third indication information indicates to perform a first operation on the third terminal device; and the first terminal device sends, to the core network element, an execution result of performing the first operation on the third terminal device.

In a possible design, the core network element is a device management network element. When the first terminal device receives the first information from the core network element, the first terminal device receives the first information from the device management network element via a first access and mobility management network element, where the first terminal device registers with the first access and mobility management network element.

In a possible design, the core network element is a first access and mobility management network element, and the first terminal device registers with the first access and mobility management network element.

In a possible design, the first terminal device deregisters from the first access and mobility management network element, and registers with a second access and mobility management network element. The first terminal device sends the result to the second access and mobility management network element.

In a possible design, the first operation is any one or more of the following: a read operation, a write operation, an access operation, a kill operation, a lock operation, a block write operation, or a block erase operation.

According to a third aspect, this application further provides an apparatus. The apparatus may perform the foregoing method design. The apparatus may be a chip or a circuit that can perform functions corresponding to the foregoing method, or a device including the chip or the circuit.

In a possible implementation, the apparatus includes: a memory, configured to store computer-executable program code; and a processor, where the processor is coupled to the memory. The program code stored in the memory includes instructions. When the processor executes the instructions, the apparatus or a device on which the apparatus is installed is enabled to perform the method according to any one of the foregoing possible designs.

The apparatus may further include a communication interface. The communication interface may be a transceiver. Alternatively, if the apparatus is a chip or a circuit, the communication interface may be an input/output interface of the chip, for example, an input/output pin.

In a possible design, the apparatus includes corresponding functional units, separately configured to implement the steps in the foregoing method. The functions may be implemented by hardware, or may be implemented by executing corresponding software by hardware. The hardware or software includes one or more units corresponding to the foregoing functions.

According to a fourth aspect, this application provides a computer-readable storage medium, where the computer-readable storage medium stores a computer program. When the computer program is run on an apparatus, the method according to any one of the foregoing possible designs is performed.

According to a fifth aspect, this application provides a computer program product, where the computer program product includes a computer program. When the computer program is run on an apparatus, the method according to any one of the foregoing possible designs is performed.

Based on the implementations provided in the foregoing aspects, this application may be further combined to provide more implementations.

### BRIEF DESCRIPTION OF DRAWINGS

To describe the technical solutions in embodiments of this application more clearly, the following briefly describes the accompanying drawings used in describing embodiments.
FIG. 1 is a diagram in which a reader performs an operation on an internet of things terminal based on an indication of an application server in conventional technologies;
FIG. 2 is a diagram of an architecture of a mobile communication system according to an embodiment of this application;
FIG. 3 is a diagram of a possible application scenario according to an embodiment of this application;
FIG. 4 is an overview flowchart of an inventory method according to an embodiment of this application;
FIG. 5A and FIG. 5B are a flowchart 1 in which a reader performs inventory on a tag according to an embodiment of this application;
FIG. 6 is a flowchart 1 in which a reader performs inventory on a tag in a scenario in which the reader deregisters from an AMF 1 and registers with an AMF 2 according to an embodiment of this application;
FIG. 7A and FIG. 7B are a flowchart 2 in which a reader performs inventory on a tag according to an embodiment of this application;
FIG. 8A and FIG. 8B are a flowchart 2 in which a reader performs inventory on a tag in a scenario in which the reader deregisters from an AMF 1 and registers with an AMF 2 according to an embodiment of this application;
FIG. 9A and FIG. 9B are a flowchart 3 in which a reader performs inventory on a tag according to an embodiment of this application;
FIG. 10A and FIG. 10B are a flowchart 3 in which a reader performs inventory on a tag in a scenario in which the reader deregisters from an AMF 1 and registers with an AMF 2 according to an embodiment of this application;
FIG. 11 is a diagram 1 of a structure of a communication apparatus according to an embodiment of this application; and
FIG. 12 is a diagram 2 of a structure of a communication apparatus according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are merely some but not all of embodiments of this application. In the specification, claims, and accompanying drawings of this application, the terms "first", "second", corresponding term numbers, and the like are intended to distinguish between similar objects but do not necessarily indicate a specific order or sequence. It should be understood that the terms used in such a way are interchangeable in proper circumstances, which is merely a differentiation manner that is used when objects of a same attribute are described in embodiments of this application. In addition, the terms "include", "have" and any other variants mean to cover the non-exclusive inclusion, so that a process, method, system, product, or device that includes a series of units is not necessarily limited to those units, but may include other units not expressly listed or inherent to such a process, method, product, or device.

In descriptions of this application, "/" means "or" unless otherwise specified. For example, A/B may represent A or B. In this application, "and/or" describes only an association relationship for describing associated objects and represents that three relationships may exist. For example, A and/or B may represent the following three cases: Only A exists, both A and B exist, and only B exists. In addition, in the descriptions of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate a, b, c, a and b, a and c, b and c, or a, b, and c, where a, b, and c may be singular or plural.

FIG. 2 is a diagram of an architecture of a mobile communication system to which an embodiment of this application is applied. The communication system includes a terminal device (for example, user equipment (user equipment, UE)), a network device (for example, an access network (access network, AN) device or a radio access network (radio access network, RAN) device, where the RAN is used as an example below for description), a core network (Core network, CN), and a data network (data network, DN). Logically, network elements in the core network may be divided into two parts: a user plane and a control plane. The control plane is responsible for mobile network management, and the user plane is responsible for service data transmission.

The following briefly describes functions of the devices in FIG. 2.

The terminal device is an entrance for interaction between a mobile user and a network, and can provide a basic computing capability and storage capability, display a service window to the user, and receive a user operation input. A next generation terminal device (NextGen UE) may establish a signal connection and a data connection to the RAN by using a new radio technology, to perform transmission of a control signal and service data to a mobile network. The terminal device may include various handheld devices, vehicle-mounted devices, wearable devices, or computing devices that have a wireless communication function, or other processing devices connected to a wireless modem, and various forms of terminals, mobile stations (mobile station, MS), terminals (terminal), soft terminals, and the like, for example, water meters, electricity meters, and sensors.

RAN: The RAN is deployed close to the terminal device, provides a network access function for an authorized user in a specific area, and can determine transport tunnels of different quality based on a user level, a service requirement, and the like to perform transmission of user data. The RAN can manage resources of the RAN, properly use the resources, provide an access service for the terminal device based on a requirement, and is responsible for forwarding the control signal and the user data between the terminal device and the core network.

Core network: The core network is responsible for maintaining subscription data of the mobile network, managing network elements in the mobile network, and providing session management, mobility management, policy management, security authentication for the terminal device, and other functions. The core network provides network access authentication for the terminal device when the terminal device is attached, allocates a network resource to the terminal device when the terminal device has a service request, updates the network resource for the terminal device when the terminal device moves, provides a fast recovery mechanism for the terminal device when the terminal device is idle, releases the network resource for the terminal device when the terminal device is detached, and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

Data network (data network, DN): The data network is a data network that provides a service for the user. Usually, a client is located on the terminal device, and a server is located on the data network. The data network may be a private network, for example, a local area network, may be an external network that is not managed or controlled by an operator, for example, the Internet (Internet), or may be a dedicated network jointly deployed by operators, for example, a network that provides an IP multimedia network subsystem (IP multimedia core network subsystem, IMS) service.

The core network user plane includes a user plane function (user plane function, UPF). The core network control plane includes an access and mobility management function (access and mobility management function, AMF), a session management function (session management function, SMF), unified data management (unified data management, UDM), a policy control function (policy control function, PCF), an application function (application function, AF), and a network exposure function (network exposure function, NEF).

The core network control plane uses a service-based architecture. Control plane network elements interact with each other in a service invoking manner instead of a point-to-point communication manner in a conventional architecture. In the service-based architecture, the control plane network element exposes a service to another control plane network element, so that the another control plane network element invokes the service. In point-to-point communication, a set of specific messages are stored in a communication interface between control plane network elements, and can be used only when the control plane network elements at two ends of the interface perform communication.

The following briefly describes functions of function entities in the core network.
1. Session management network element: The session management network element is mainly configured to: manage a session, assign and manage an IP address of the terminal device, select an endpoint that can manage a user equipment plane function, policy control, or a charging function interface, notify downlink data, and the like. In 5G communication, the session management network element may be an SMF network element. In future communication such as 6G communication, the session management function network element may still be an SMF network element or have another name. This is not limited in this application. Nsmf is a service-based interface provided by the SMF. The SMF may communicate with another network function through Nsmf.
2. Access management network element: The access management network element is mainly used for mobility management, access management, and the like. For example, the access management network element may be a mobility management entity (mobility management entity, MME) function in a 4G communication network or an AMF network element in a 5G network. In future communication such as 6G communication, the access management network element may still be an AMF network element or have another name. This is not limited in this application. Namf is a service-based interface provided by the AMF. The AMF may communicate with another network function through Namf.
3. Policy control network element: The policy control network element is configured for a unified policy framework to govern network behavior, and provides policy rule information and the like for a control plane function network element (for example, an AMF or an SMF). In 5G communication, the policy control network element may be a PCF network element. In future communication such as 6G communication, the policy control network element may still be a PCF network element or have another name. This is not limited in this application. Npcf is a service-based interface provided by the PCF. The PCF may communicate with another network function through Npcf.
4. Data management network element: The data management network element is used for user identifier processing, subscription, access authentication, registration, mobility management, or the like. In 5G communication, the data management network element may be a UDM network element. In future communication such as 6G communication, the data management function network element may still be a UDM network element or have another name. This is not limited in this application. Nudm is a service-based interface provided by the UDM. The UDM may communicate with another network function through Nudm.
5. Application network element: The application network element is configured to: perform application-affected data routing, access a network exposure function, interact with a policy framework to perform policy control, or the like. In 5G communication, the application network element may be an AF network element. In future communication such as 6G communication, the application network element may still be an AF network element or have another name. This is not limited in this application. Naf is a service-based interface provided by the AF. The AF may communicate with another network function through Naf.
6. User plane network element: The user plane network element is used for packet routing and forwarding, quality of service (quality of service, QoS) handling of user plane data, or the like. In 5G communication, the user plane network element may be a user plane function (user plane function, UPF) network element. In future communication such as 6G communication, the user plane network element may still be a UPF network element or have another name. This is not limited in this application.
7. Network exposure function network element: The network exposure function network element is configured for secure exposure of services, capabilities, and the like that are provided by a 3GPP network function. In 5G communication, the network capability exposure network element may be an NEF network element. In future communication such as 6G communication, the network capability exposure network element may still be an NEF network element or have another name. This is not limited in this application. Nnef is a service-based interface provided by the NEF. The NEF may communicate with another network function through Nnef.

It may be understood that FIG. 2 is merely an example, and the core network may further include more or fewer network elements. This is not limited in this application.

The technical solutions provided in embodiments of this application may be applied to various communication systems. For example, the technical solutions may be applied to an LTE system or a 5G system, or may be applied to another future-oriented new system. This is not specifically limited in embodiments of this application. In addition, the terms "system" and "network" can be interchanged with each other.

FIG. 3 is a diagram of a possible application scenario according to an embodiment of this application.

In a communication system shown in FIG. 3, the communication system may include an ambient device (which may also be referred to as a passive device), a terminal device (which may also be referred to as an active terminal device or a common terminal device) that accesses a network, a tag management service (tag management service, TMF) network element (which may also be referred to as a device management network element), an AMF, and an AF.

In FIG. 3, the ambient device is shown by using a tag as an example. The ambient device in embodiments of this application is not limited to the tag. For example, the terminal device is a reader (Reader). The reader accesses a network, and may perform an operation on the tag. There is an interface between the reader and the AMF for interaction between them. The TMF may support a tag management function, and the function supports tag management operations. The TMF may directly communicate with the AF, or communicate with the AF through an NEF network element. The TMF may receive a command from the AF, and send the command to the reader through the AMF, to perform an operation on the tag. In addition, the TMF may be used as an independent network element, or may be co-deployed with another network element. For example, the TMF may be co-deployed with the NEF, or may be co-deployed with a UDM. This is not limited in this application.

Based on this, this application provides an inventory method, so that a core network element controls a terminal device to perform an operation on an ambient device.

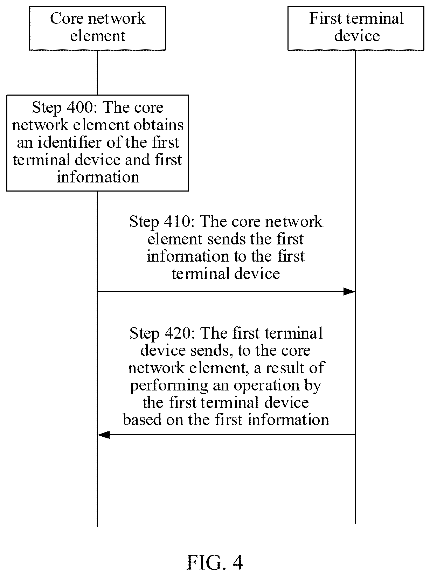

As shown in FIG. 4, the method includes the following steps.

Step 400: The core network element obtains an identifier of a first terminal device and first information, where the first information is used to determine one or more second terminal devices on which an operation is to be performed, and the first terminal device is configured to perform the operation on the second terminal device.

The first terminal device may be a terminal device that accesses a network, and may also be referred to as a common terminal device or an active terminal device. For example, the first terminal device corresponds to the reader in FIG. 3, and has a capability of accessing a 3GPP network and a capability of supporting an operation on the ambient device. The second terminal device is the ambient device, and may also be referred to as a passive or semi-passive device. For example, the second terminal device corresponds to the tag in FIG. 3.

For example, the first information may include an identifier of the one or more second terminal devices on which the operation is to be performed. The identifier of the one or more second terminal devices on which the operation is to be performed may be an identifier list, an identifier interval, or the like. For example, the first information includes a tag identifier list, a tag identifier interval, or the like.

For example, the first information may further include an application identifier, and the application identifier identifies an application that initiates inventory. Further, the application identifier may be used to determine the one or more second terminal devices.

Step 410: The core network element sends the first information to the first terminal device.

Step 420: The first terminal device sends, to the core network element, a result of performing the operation by the first terminal device based on the first information.

The result of performing the operation by the first terminal device based on the first information may also be referred to as a result of performing an operation by the first terminal device on the second terminal device.

The following describes, with reference to two possible implementations, the result of performing the operation by the first terminal device based on the first information.

### First possible implementation:

After the first terminal device completes query of all the second terminal devices in a coverage area based on the first information, the first terminal device reports the result of performing the operation by the first terminal device based on the first information. The result includes identifiers of a part or all of the one or more second terminal devices. In other words, the core network element receives the identifiers that are of the part or all of the one or more second terminal devices and that are sent by the first terminal device.

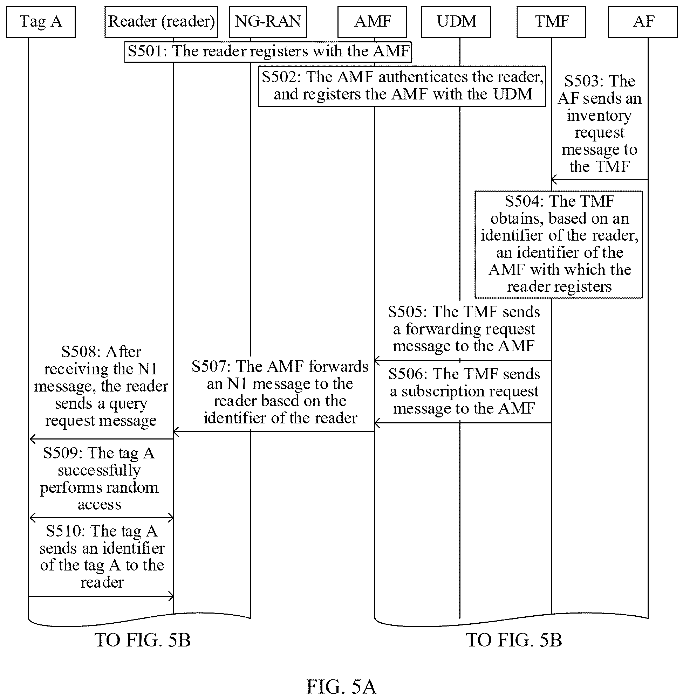

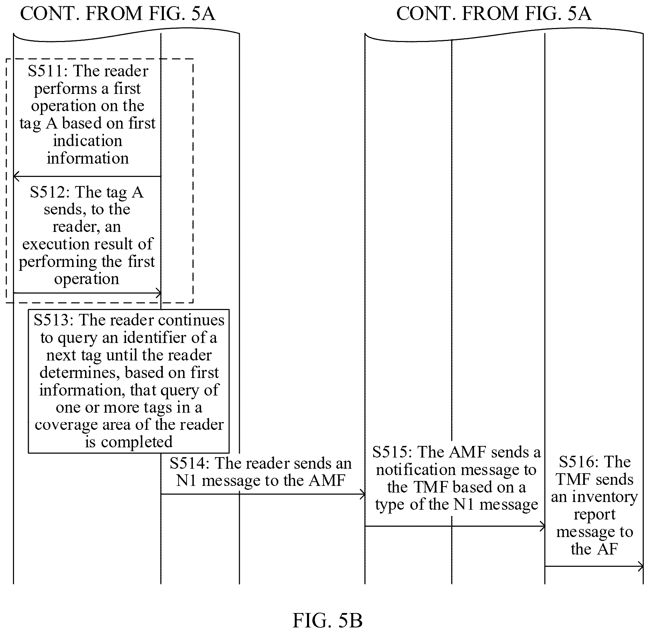

It may be understood that the one or more second terminal devices herein are one or more second terminal devices that are determined based on the first information and on which an operation is to be performed. The part or all of the second terminal devices herein are second terminal devices that are in the one or more second terminal devices and that successfully perform random access in the coverage area of the first terminal device. For a specific random access procedure, refer to related descriptions of S509 in the following embodiment shown in FIG. 5A and FIG. 5B.

In this case, the operation performed by the first terminal device on the second terminal device includes a query operation, which may also be referred to as an inventory operation.

For example, the first terminal device determines a tag 1 to a tag 10 based on the first information. If the first terminal device finds that there are the tag 1, the tag 2, the tag 5, and the tag 7 in the coverage area, the first terminal device sends an identifier of the tag 1, an identifier of the tag 2, an identifier of the tag 5, and an identifier of the tag 7 to the core network element. The tag 1, the tag 2, the tag 5, and the tag 7 herein are tags that successfully perform random access.

In addition, in some possible embodiments, the core network element may further obtain first indication information, where the first indication information indicates to perform a first operation on the second terminal device. The core network element sends the first indication information to the first terminal device.

For example, the first indication information may include indication information indicating the first operation.

For example, the first operation may include any one or more of a read (read) operation, a write (write) operation, a kill (kill) operation, a lock (lock) operation, a block write operation, or a block erase operation.

Optionally, the first indication information further includes a parameter related to the first operation. For example, for the read operation, a parameter related to the read operation includes a read storage area, a start byte address of the read storage area, a quantity of bytes, and the like. For another example, for the write operation, a parameter related to the write operation includes a write storage area, a start byte of the write storage area, and written data. For the written data, same data may be written for all second terminal devices, or different data may be written for different second terminal devices.

Further, the core network element may further receive an execution result that is of performing the first operation on the part or all of the one or more second terminal devices and that is sent by the first terminal device.

In other words, the first terminal device queries a second terminal device in the coverage area based on the first information, and performs the first operation on a found second terminal device (or a second terminal device obtained through inventory). The result that is of performing the operation by the first terminal device based on the first information and that is reported by the first terminal device to the core network element includes the identifiers of the part or all of the one or more second terminal devices and the execution result of performing the first operation on the part or all of the second terminal devices. In this case, the operation performed by the first terminal device on the second terminal device includes the inventory operation and the first operation.

For example, the first terminal device determines a tag 1 to a tag 10 based on the first information, and the first terminal device finds, through querying, that there are the tag 1, the tag 2, the tag 5, and the tag 7 in the coverage area. It is assumed that the first operation is a write operation. If the first terminal device performs the write operation on each of the tag 1, the tag 2, the tag 5, and the tag 7 based on the first indication information, the first terminal device sends, to the core network element, an identifier of the tag 1, an identifier of the tag 2, an identifier of the tag 5, an identifier of the tag 7, information indicating that the write operation on the tag 1 is completed, information indicating that the write operation on the tag 2 is completed, information indicating that the write operation on the tag 5 is completed, and information indicating that the write operation on the tag 7 is completed.

It may be understood that the core network device may send the first information and the first indication information to the first terminal device via one message, for example, an N1 message or a non-access stratum (non-access stratum, NAS) message, or the core network device may send the first information and the first indication information to the first terminal device via two messages. This is not limited in this application.

Similarly, the first terminal device may send, to the core network device via one message, for example, an N1 message, the identifiers of the part or all of the one or more second terminal devices and the execution result of performing the first operation on the second terminal device. Alternatively, the first terminal device may send, to the core network element via two messages, the identifiers of the part or all of the one or more second terminal devices and the execution result of performing the first operation on the second terminal device. This is not limited in this application.

### Second possible implementation:

After the first terminal device determines, through querying based on the first information, that one second terminal device (namely, a third terminal device) in the coverage area is found, the first terminal device reports an identifier of the third terminal device as the result of performing the operation by the first terminal device based on the first information. In other words, the core network element receives the identifier that is of the third terminal device and that is sent by the first terminal device.

It may be understood that the second terminal device and the third terminal device are terminal devices of a same type, that is, both are ambient devices. The third terminal device belongs to the one or more second terminal devices, that is, the one or more second terminal devices that are determined based on the first information and on which the operation is to be performed.

Further, the core network element sends second indication information to the first terminal device, where the second indication information indicates at least one of the following content: indicating to complete an operation on the third terminal device, indicating to query a next second terminal device, or indicating to perform a random access procedure.

For example, that the second indication information indicates to complete the operation on the third terminal device may be understood as indicating to complete a query operation (or an inventory operation) on the third terminal device. Then, the query operation may continue to be performed on another second terminal device.

That the second indication information indicates to query the next second terminal device may be understood as indicating the first terminal device to continue to query another second terminal device.

That the second indication information indicates to perform the random access procedure may be understood as indicating the first terminal device to continue to perform a random access procedure of another second terminal device.

After the first terminal device receives the second indication information, the first terminal device continues to query, based on the first information, whether there is another second terminal device in the coverage area. If there is another second terminal device in the coverage area, when finding, through querying, a next second terminal device (for example, a fourth terminal device), the first terminal device sends an identifier of the fourth terminal device to the core network element. If there is no other second terminal device in the coverage area, the first terminal device sends a notification message to the core network element, where the notification message indicates that the first terminal device completes inventory on second terminal devices that can be found through querying.

For example, the first terminal device determines, through querying, a tag 1 to a tag 10 based on the first information. If the first terminal device finds that there is the tag 1 in the coverage area, the first terminal device sends an identifier of the tag 1 to the core network element. The first terminal device receives the second indication information from the core network element, where the second indication information indicates to query a next second terminal device. If the first terminal device finds, through querying based on the second indication information, that there is the tag 2 in the coverage area, the first terminal device sends an identifier of the tag 2 to the core network element. The rest is deduced by analogy until the first terminal device completes inventory on the second terminal devices that can be found through querying in the coverage area, and sends a notification message to the core network element, where the notification message indicates that the first terminal device completes inventory on the second terminal devices that can be found through querying.

In addition, in some possible embodiments, the core network element further obtains first indication information, where the first indication information indicates to perform a first operation on the second terminal device. For specific content of the first indication information and the first operation, refer to the related descriptions in the foregoing implementation 1. Details are not described herein again.

Before the core network element sends the second indication information to the first terminal device, the core network element sends third indication information to the first terminal device, where the third indication information indicates to perform a first operation on the third terminal device. After receiving the third indication information, the first terminal device performs the first operation on the third terminal device, and sends, to the core network element, an execution result of performing the first operation on the third terminal device.

It should be noted that, in this case, that the second indication information indicates to complete the operation on the third terminal device may be understood as indicating to complete the query operation and the first operation on the third terminal device.

In this application, the core network element may be a device management network element or a first access and mobility management network element. The first terminal device registers with the first access and mobility management network element. In addition, the core network element may alternatively be another network element. This is not limited in this application.

For example, in a scenario in which the core network element is the device management network element, for example, corresponds to the TMF in FIG. 3, the device management network element may be an independent function network element, or may be integrated into another function network element, for example, an NEF.

The device management network element may obtain the identifier of the first terminal device and the first information from an application function network element directly or from the application function network element through a network exposure function network element. Further, the device management network element sends the first information to the first terminal device through the first access and mobility management network element, and the first terminal device registers with the first access and mobility management network element.

In addition, the device management network element may further send a subscription request message to the first access and mobility management network element, where the subscription request message is used to subscribe to the result of performing the operation by the first terminal device based on the first information. The first terminal device sends, to the device management network element through the first access and mobility management network element, the result of performing the operation by the first terminal device based on the first information. For example, the first access and mobility management network element receives, from the first terminal device, the result of performing the operation by the first terminal device based on the first information, and sends a first notification message to the device management network element, where the first notification message responds to the subscription request message, and the first notification message includes the result of performing the operation by the first terminal device based on the first information.

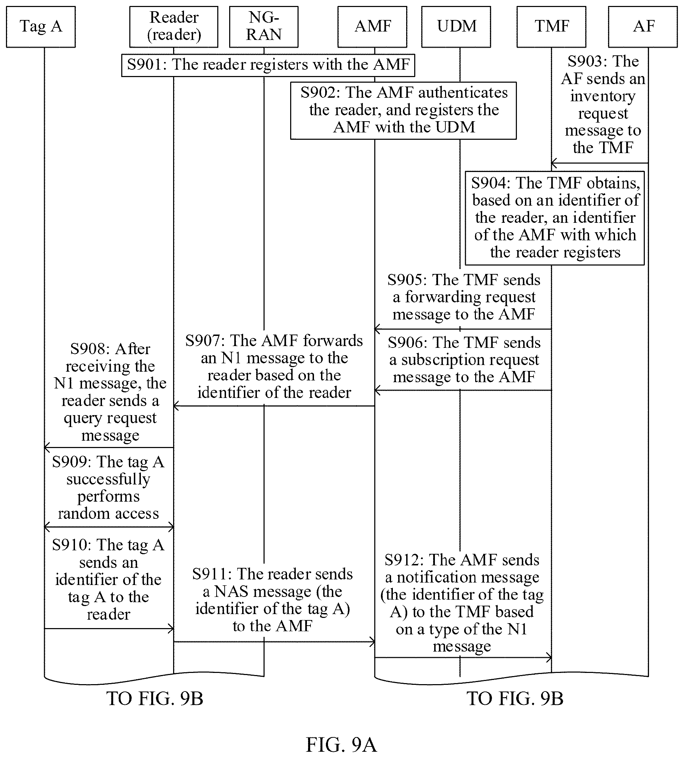

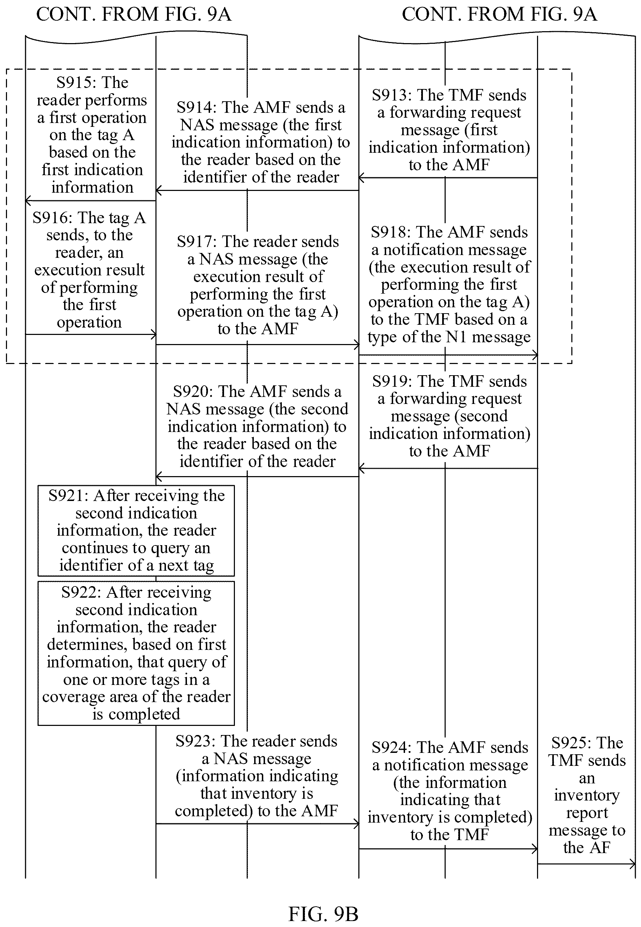

For details, refer to the following embodiments shown in FIG. 5A and FIG. 5B and FIG. 9A and FIG. 9B.

For example, in a scenario in which the core network element is a first access and mobility management network element, the first access and mobility management network element may obtain the identifier of the first terminal device and the first information from a device management network element or another network element.

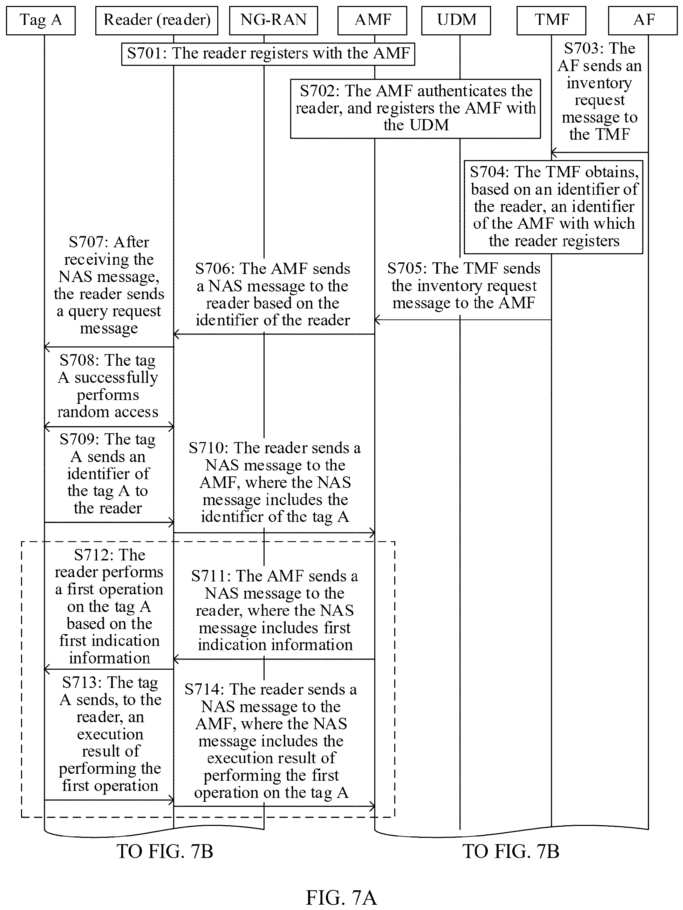

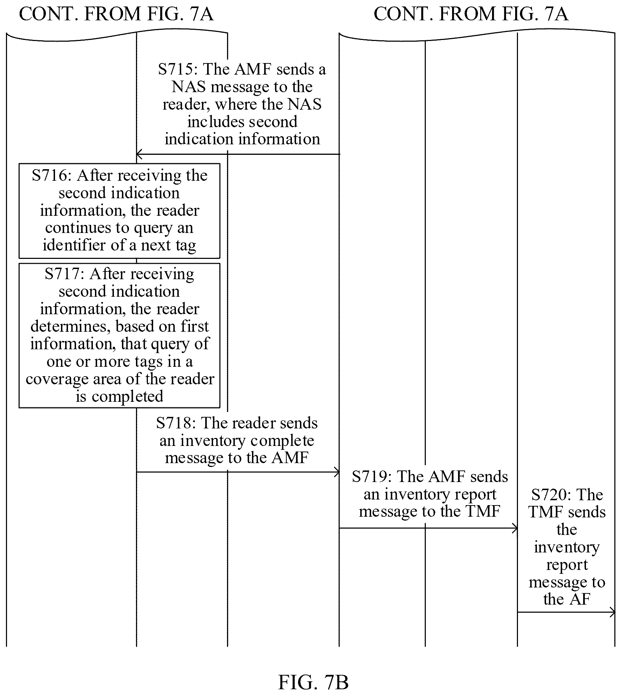

For details, refer to the following embodiment shown in FIG. 7A and FIG. 7B.

In some possible embodiments, if the first terminal device deregisters from the first access and mobility management network element and registers with a second access and mobility management network element, and after the first access and mobility management network element sends the first information to the first terminal device, the second access and mobility management network element may obtain the first information from the first access and mobility management network element. Further, the first terminal device sends, to the second access and mobility management network element, the result of performing the operation based on the first information, and the second access and mobility management network element sends, to the device management network element, the result of performing the operation based on the first information.

It may be understood that, because the first terminal device deregisters from the first access and mobility management network element, the result of performing the operation by the first terminal device based on the first information is no longer sent to the first access and mobility management network element, but is sent to an access and mobility management network element with which the first terminal device currently registers, that is, the second access and mobility management network element.

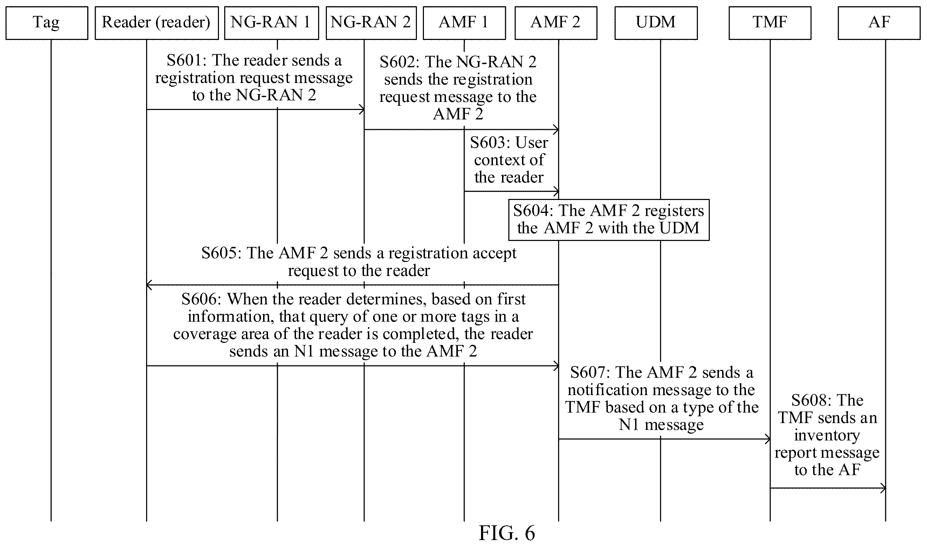

For details, refer to the following embodiments shown in FIG. 6, FIG. 8A and FIG. 8B, and FIG. 10A and FIG. 10B.

FIG. 5A and FIG. 5B show a specific process 1 in which a reader (Reader) performs inventory on a tag. The reader corresponds to the first terminal device in the embodiment shown in FIG. 4, the tag corresponds to the second terminal device in the embodiment shown in FIG. 4, and a TMF corresponds to the core network element in the embodiment shown in FIG. 4.

S501: The reader registers with an AMF.

For example, the reader serves as 3GPP UE and sends a temporary identifier (5G globally unique temporary identifier, 5G-GUTI) or a concealed identifier (subscription concealed identifier, SUCI) to the AMF in a registration process. The AMF determines a permanent identifier (subscription permanent identifier, SUPI) corresponding to the reader based on the 5G-GUTI or the SUCI.

S502: The AMF authenticates the reader, and registers the AMF with a UDM.

For example, the AMF stores the SUPI of the reader and an AMF identifier of the AMF in the UDM.

S503: An AF sends an inventory request message to the TMF.

For example, the inventory request message includes an identifier (which may be the SUPI or a generic public subscription identifier (generic public subscription identifier, GPSI)) of the reader and first information. The first information is used to determine one or more tags on which an operation is to be performed.

Optionally, the inventory request message may further include first indication information. The first indication information indicates to perform a first operation on the tag.

S504: The TMF obtains, based on the identifier of the reader, an identifier of the AMF with which the reader registers.

For example, the TMF sends the identifier (the SUPI or the GPSI) of the reader to the UDM. After determining a corresponding identifier of the AMF based on the identifier of the reader, the UDM sends, to the TMF, the identifier of the AMF with which the reader registers. For example, the UDM stores a correspondence between the SUPI and the identifier of the AMF. The following uses only an example in which the identifier of the reader is the SUPI for description.

S505: The TMF sends a forwarding request message to the AMF.

For example, an N1 message (namely, a NAS message) and the identifier (the SUPI) of the reader are encapsulated in the forwarding request message. The N1 message includes the first information. Optionally, the N1 message further includes the first indication information.

S506: The TMF sends a subscription request message to the AMF.

For example, the subscription request message includes the identifier (the SUPI) of the reader and a subscribed message type. For example, the subscribed message type is an inventory message type or an ambient device message type.

S507: The AMF forwards the N1 message to the reader based on the identifier (the SUPI) of the reader.

The N1 message includes the first information. Optionally, the N1 message further includes the first indication information.

S508: After receiving the N1 message, the reader sends a query request message.

For example, the reader sends radio frequency information to a tag in a coverage area, to provide an excitation signal for the tag in the coverage area of the reader, so that the tag in the coverage area sends a signal to the reader. Further, the reader may select one or more tags from tags in the coverage area based on the first information, and the reader may send the query request message to the one or more selected tags.

S509: The one or more selected tags initiate a random access procedure. For example, a tag A successfully performs random access, where the tag A is one of the one or more selected tags.

For example, a specific random access procedure of the tag A may include the following steps.

The reader includes a first random number in the query request message, and the one or more selected tags locally set a second random number based on the first random number. When the second random number set by the tag A is 0, the tag A sends a third random number to the reader. The third random number may be carried in a random access request message. If the reader can correctly receive the third random number, the reader sends the third random number to the tag A. The third random number may be carried in a random access response message. When the tag A receives the third random number, the tag A determines that the random access succeeds.

S510: The tag A sends an identifier of the tag A to the reader.

S511: If the reader further receives the first indication information, the reader performs the first operation on the tag A based on the first indication information.

S512: The tag A sends, to the reader, an execution result of performing the first operation.

It may be understood that S511 and S512 are optional steps.

For example, when the first operation includes a read operation, the execution result of performing the first operation may include read data. The read data may be encrypted, for example, may be encrypted using a key. The key may be obtained in a plurality of manners, and the key may be preconfigured on a side of the tag A.

When the first operation includes a write operation, the execution result of performing the first operation may include information indicating that the write operation on the tag A is completed.

When the first operation includes an access operation, the execution result of performing the access operation may include indication information indicating that the access operation on the tag A is completed.

When the first operation includes a kill operation, the execution result of performing the first operation may include information indicating that the kill operation on the tag A is completed.

When the first operation includes a lock operation, the execution result of performing the first operation may include indication information indicating that the lock operation on the tag A is completed.

When the first operation includes a block write operation, the execution result of performing the first operation may include information indicating that the block write operation on the tag A is completed.

When the first operation includes a block erase operation, the execution result of performing the first operation may include information indicating that the block erase operation on the tag A is completed.

S513: The reader continues to query an identifier of a next tag until the reader determines, based on the first information, that query of one or more tags in the coverage area of the reader is completed (or inventory is completed).

For example, the reader sends a query request message to the selected one or more tags. Specifically, the query request message may be a query repeat message. The tag A does not respond after receiving the query request message. After receiving the query request message, one or more other selected tags initiate a random access procedure, and one of the tags successfully performs random success. For example, for differentiation, the tag that successfully performs random access is referred to as a tag B herein, the tag B is different from the tag A, and the tag B is one of the one or more selected tags.

A random access procedure of the tag B may include: The one or more selected tags except the tag A subtract 1 from the previously set second random number. After the tag B subtracts 1 from the previous second random number, when the second random number is reduced to 0, the tag B sends a fourth random number to the reader. If the reader can correctly receive the fourth random number, the reader sends the fourth random number to the tag B. When the tag B receives the fourth random number, the tag B determines that the random access succeeds. After the tag B successfully performs random access, the tag B sends an identifier of the tag B to the reader.

In addition, if the reader further receives the first indication information, the reader further performs the first operation on the tag B. For a specific process in which the reader further performs the first operation on the tag B, refer to the specific process in which the reader performs the first operation on the tag A. Details are not described herein again.

For example, that the reader determines, with reference to the first information, that the query of the one or more tags in the coverage area of the reader is completed may also be described as that the reader determines, through querying based on the first information, that an operation on the one or more tags that can be found by the reader is completed (or inventory is completed).

In a possible design, if the reader does not receive, in preconfigured time, a random access request message initiated by any tag, the reader determines, with reference to the first information, that the query of the one or more tags in the coverage area of the reader is completed (or the inventory is completed)

It may be understood that the one or more tags finally found through querying by the reader may be a part or all of the one or more selected tags. The one or more selected tags may be a part or all of the one or more tags on which the operation is to be performed and that are determined based on the first information.

S514: The reader sends an N1 message to the AMF, where the N1 message includes a type of the N1 message and an N1 message container (Container). The N1 message container includes an identifier of the one or more tags that are found through querying. Optionally, the N1 message container further includes an execution result of correspondingly performing the first operation on each of the one or more tags that are found through querying. The type of the N1 message is an inventory message type or an ambient device message type.

S515: The AMF sends a notification message to the TMF based on the type of the N1 message, where the notification message includes the N1 message container.

S516: The TMF sends an inventory report message to the AF, where the inventory report message includes the identifier of the one or more tags. Optionally, the inventory report message further includes the execution result of correspondingly performing the first operation on each of the one or more tags.

For example, in the architecture diagram shown in FIG. 3, the AF and the TMF may further interact with each other through the NEF.

In addition, after S507, a location of the reader may move, and the reader is handed over from accessing an NG-RAN 1 to accessing an NG-RAN 2. FIG. 6 shows a specific process 1 in which a reader performs inventory on a tag after the reader deregisters from an AMF 1 and registers with an AMF 2.

S601: The reader sends a registration request message to the NG-RAN 2.

S602: The NG-RAN 2 sends the registration request message to the AMF 2.

For example, when the NG-RAN 2 is not connected to the AMF 1, the NG-RAN selects the AMF 2, and sends the registration request message to the AMF 2. It may be understood that the AMF 1 herein corresponds to the AMF in the embodiment shown in FIG. 5A and FIG. 5B.

S603: The AMF 1 sends a user context of the reader to the AMF 2.

For example, the user context of the reader includes an N1 message. The N1 message includes first information. Optionally, the N1 message further includes first indication information.

S604: The AMF 2 registers the AMF 2 with a UDM.

S605: The AMF 2 sends a registration accept request to the reader.

S606: When the reader determines, based on the first information, that query of one or more tags in a coverage area of the reader is completed (or inventory is completed), the reader sends an N1 message to the AMF 2.

The N1 message includes a type of the N1 message and an N1 message container (Container). The N1 message container includes an identifier of the one or more tags that are found through querying. Optionally, the N1 message container further includes an execution result of correspondingly performing a first operation on each of the one or more tags that are found through querying. The type of the N1 message is an inventory message type or an ambient device message type.

It should be noted that, in a process in which the reader deregisters from the AMF 1 and registers with the AMF 2, the reader moves with a tag. After the reader receives the N1 message, that is, after S507, the reader starts to perform inventory on the tag, that is, continues to perform S508 to S513. Deregistration and re-registration of the reader do not affect inventory of the reader on the tag, so that timeliness of inventory on the tag can be ensured.

However, because the reader deregisters from the AMF 1 and registers with the AMF 2, when the reader reports the result of performing the operation based on the first information, the reader cannot send the result to the AMF 1, and can send the result to only the AMF 2.

S607: The AMF 2 sends a notification message to a TMF based on the type of the N1 message, where the notification message includes the N1 message container.

S608: The TMF sends an inventory report message to an AF, where the inventory report message includes the identifier of the one or more tags. Optionally, the inventory report message further includes an execution result of correspondingly performing the first operation on each of the identifier of the one or more tags.

FIG. 7A and FIG. 7B show a specific process 2 in which a reader performs inventory on a tag. The reader corresponds to the first terminal device in the embodiment shown in FIG. 4, the tag corresponds to the second terminal device in the embodiment shown in FIG. 4, and an AMF corresponds to the core network element in the embodiment shown in FIG. 4.

For S701 to S704, refer to S501 to S504.

S705: The TMF sends an inventory request message to the AMF.

S706: The AMF sends a NAS message to the reader based on an identifier (for example, an SUPI) of the reader, where the NAS message includes first information.

S707: After receiving the NAS message, the reader sends a query request message.

For details, refer to the related descriptions of S508.

S708: The one or more selected tags initiate a random access procedure. For example, a tag A successfully performs random access, where the tag A is one of the one or more selected tags.

For details, refer to the related descriptions of S509.

S709: The tag A sends an identifier of the tag A to the reader.

S710: The reader sends a NAS message to the AMF, where the NAS message includes the identifier of the tag A.

S711: If the inventory request message of the AMF in S705 further includes first indication information, the AMF sends a NAS message to the reader, where the NAS message includes the first indication information.

S712: The reader performs a first operation on the tag A based on the first indication information.

S713: The tag A sends, to the reader, an execution result of performing the first operation.

S714: The reader sends a NAS message to the AMF, where the NAS message includes the execution result of performing the first operation on the tag A.

It may be understood that S711 to S714 are optional steps.

S715: The AMF sends a NAS message to the reader, where the NAS message includes second indication information, and the second indication information indicates at least one of the following content: indicating to complete an operation on the tag A, indicating to query a next tag, or indicating to perform a random access procedure.

S716: After receiving the second indication information, the reader continues to query an identifier of a next tag.

For details, refer to the related descriptions of S513.

S717: After receiving second indication information, the reader determines, based on the first information, that query of one or more tags in a coverage area of the reader is completed (or inventory is completed).

It may be understood that the reader may continue to query an identifier of a next tag each time after receiving the second indication information. If the reader does not receive, in preconfigured time after receiving the second indication information, a random access request message initiated by any tag, the reader determines, with reference to the first information, that the query of the one or more tags in the coverage area of the reader is completed (or the inventory is completed).

For example, it is assumed that the second indication information indicates to query a next tag, and the inventory request message received by the AMF does not include the first indication information. After the reader receives the second indication information, the reader continues to query an identifier of the next tag. For example, a tag B successfully performs random access, and in this case, the reader sends an identifier of the tag B to the AMF. The AMF sends the second indication information to the reader, and the reader continues to query an identifier of a next tag. For example, if a tag K successfully performs random access, the reader sends an identifier of the tag K to the AMF. The rest may be deduced by analogy until after the AMF sends second indication information to the reader, if the reader does not receive, in preconfigured time, a random access request message initiated by any tag, the reader determines, with reference to the first information, that the query of the one or more tags in the coverage area of the reader is completed.

S718: The reader sends an inventory complete message (or a query complete message) to the AMF.

For example, the inventory complete message may indicate that for the current inventory initiated by an AF, the reader completes inventory on the tags that can be found through querying by the reader.

S719: The AMF sends an inventory report message to the TMF.

For example, the inventory report message includes an identifier of the one or more tags. Optionally, the inventory report message further includes an execution result of correspondingly performing the first operation on each of the identifier of the one or more tags.

S720: The TMF sends the inventory report message to the AF.

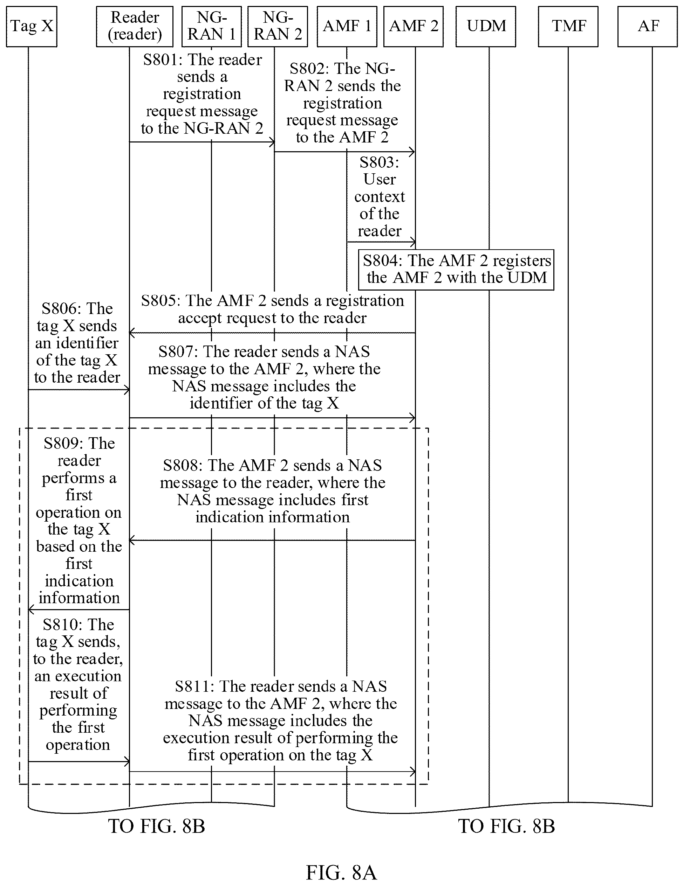

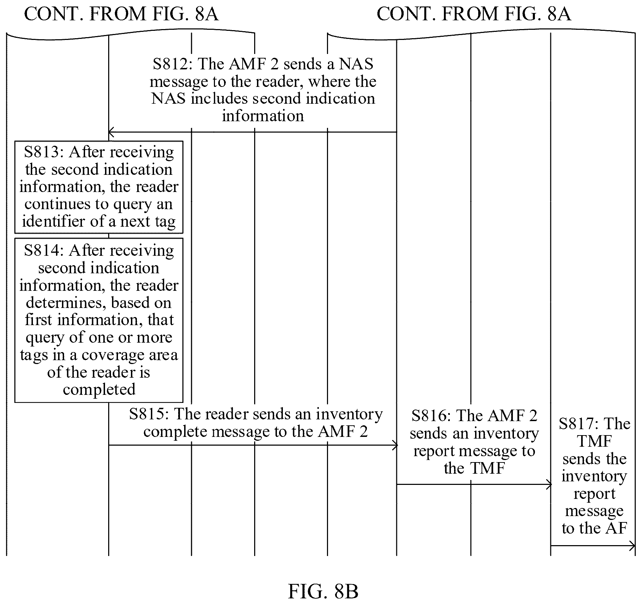

In addition, after S706, a location of the reader may move, and the reader is handed over from accessing an NG-RAN 1 to accessing an NG-RAN 2. FIG. 8A and FIG. 8B show a specific process 2 in which a reader performs inventory on a tag after the reader deregisters from an AMF 1 and registers with an AMF 2.

For S801 to S805, refer to S601 to S605.

S806: A tag X sends an identifier of the tag X to the reader.

It should be noted that, in a process in which the reader deregisters from the AMF 1 and registers with the AMF 2, the reader moves with a tag. After the reader receives a NAS message, that is, after S706, the reader starts to perform inventory on a tag. The tag X is the first tag obtained through inventory after the reader re-registers with the AMF 2. It may be understood that the reader may have inventoried another tag and send an identifier of the another tag to the AMF 1. Therefore, deregistration and re-registration of the reader do not affect inventory of the reader on the tag, so that timeliness of inventory on the tag can be ensured.

However, because the reader deregisters from the AMF 1 and registers with the AMF 2, the reader reports the identifier of the tag obtained through inventory to the AMF 2.

S807: The reader sends a NAS message to the AMF 2, where the NAS message includes the identifier of the tag X.

S808: If a user context of the reader includes first indication information, the AMF 2 sends a NAS message to the reader, where the NAS message includes the first indication information.

S809: The reader performs a first operation on the tag X based on the first indication information.

S810: The tag X sends, to the reader, an execution result of performing the first operation.

S811: The reader sends a NAS message to the AMF 2, where the NAS message includes the execution result of performing the first operation on the tag X.

It may be understood that S808 to S811 are optional steps.

S812: The AMF 2 sends a NAS message to the reader, where the NAS includes second indication information, and the second indication information indicates at least one of the following content: indicating to complete an operation on the tag X, indicating to query a next tag, or indicating to perform a random access procedure.

S813: After receiving the second indication information, the reader continues to query an identifier of a next tag.

S814: After receiving second indication information, the reader determines, based on the first information, that query of one or more tags in a coverage area of the reader is completed.

S815: The reader sends an inventory complete message to the AMF 2.

For example, the inventory complete message may indicate that for the current inventory initiated by an AF, the reader completes inventory on the tags that can be found through querying by the reader.

S816: The AMF 2 sends an inventory report message to a TMF.

For example, the inventory report message includes an identifier of the one or more tags. Optionally, the inventory report message further includes an execution result of correspondingly performing the first operation on each of the identifier of the one or more tags.

S817: The TMF sends the inventory report message to the AF.

FIG. 9A and FIG. 9B show a specific process 3 in which a reader performs inventory on a tag. The reader corresponds to the first terminal device in the embodiment shown in FIG. 4, the tag corresponds to the second terminal device in the embodiment shown in FIG. 4, and a TMF corresponds to the core network element in the embodiment shown in FIG. 4.

For S901 to S910, refer to S501 to S510.

S911: The reader sends a NAS message to the AMF.

For example, the NAS message includes an N1 message container and a type of an N1 message, the type of the N1 message is an inventory message type or an ambient device message type, and the N1 message container includes an identifier of a tag A.

S912: The AMF sends a notification message to the TMF based on the type of the N1 message.

For example, the notification message includes the N1 message container, and the N1 message container includes the identifier of the tag A.

S913: If the inventory request message received by the TMF in S903 further includes first indication information, the TMF sends a forwarding request message to the AMF, where the N1 message (namely, the NAS message) and an identifier (for example, an SUPI) of the reader are encapsulated in the forwarding request message. The N1 message includes the first indication information.

S914: The AMF sends a NAS message to the reader based on the identifier (for example, the SUPI) of the reader, where the NAS message includes the first indication information.

S915: The reader performs a first operation on the tag A based on the first indication information.

S916: The tag A sends, to the reader, an execution result of performing the first operation.

S917: The reader sends a NAS message to the AMF.

For example, the NAS message includes the N1 message container and the type of the N1 message. The N1 message container includes the execution result of performing the first operation on the tag A. The type of the N1 message is the inventory message type or the ambient device message type.

S918: The AMF sends a notification message to the TMF based on the type of the N1 message.

For example, the notification message includes the N1 message container. The N1 message container includes the execution result of performing the first operation on the tag A.

S913 to S918 are optional steps.

S919: The TMF sends a forwarding request message to the AMF.

For example, an N1 message (namely, a NAS message) and the identifier (for example, the SUPI) of the reader are encapsulated in the forwarding request message. The N1 message includes second indication information, and the second indication information indicates at least one of the following content: indicating to complete an operation on the tag A, indicating to query a next tag, or indicating to perform a random access procedure.

S920: The AMF sends a NAS message to the reader based on the identifier (for example, the SUPI) of the reader.

For example, the NAS message includes the second indication information.

S921: After receiving the second indication information, the reader continues to query an identifier of a next tag.

S922: After receiving second indication information, the reader determines, based on the first information, that query of one or more tags in a coverage area of the reader is completed (or inventory is completed).

For example, it is assumed that the second indication information indicates to query a next tag, and the inventory request message received by the TMF does not include the first indication information. After the reader receives the second indication information, the reader continues to query an identifier of the next tag. For example, a tag B successfully performs random access, and in this case, the reader sends an identifier of the tag B to the TMF through the AMF. The TMF sends the second indication information to the reader through the AMF, and the reader continues to query an identifier of a next tag. For example, if a tag K successfully performs random access, the reader sends an identifier of the tag K to the TMF through the AMF. The rest may be deduced by analogy until after the TMF sends second indication information to the reader through the AMF, if the reader does not receive, in preconfigured time, a random access request message initiated by any tag, the reader determines, with reference to the first information, that the query of the one or more tags in the coverage area of the reader is completed.

S923: The reader sends a NAS message to the AMF.

For example, the NAS message includes an N1 message container and a type of an N1 message. The N1 message container includes information indicating that inventory is completed, and the information indicating that the inventory is completed may indicate that for the current inventory initiated by the AF, the reader completes inventory on the tags that can be found through querying by the reader. The type of the N1 message is an inventory message type or an ambient device message type.

S924: The AMF sends a notification message to the TMF.

For example, the notification message includes the N1 message container, and the N1 message container includes the information indicating that the inventory is completed.

S925: The TMF sends an inventory report message to the AF.

For example, the inventory report message includes an identifier of the one or more tags. Optionally, the inventory report message further includes an execution result of correspondingly performing the first operation on each of the identifier of the one or more tags.

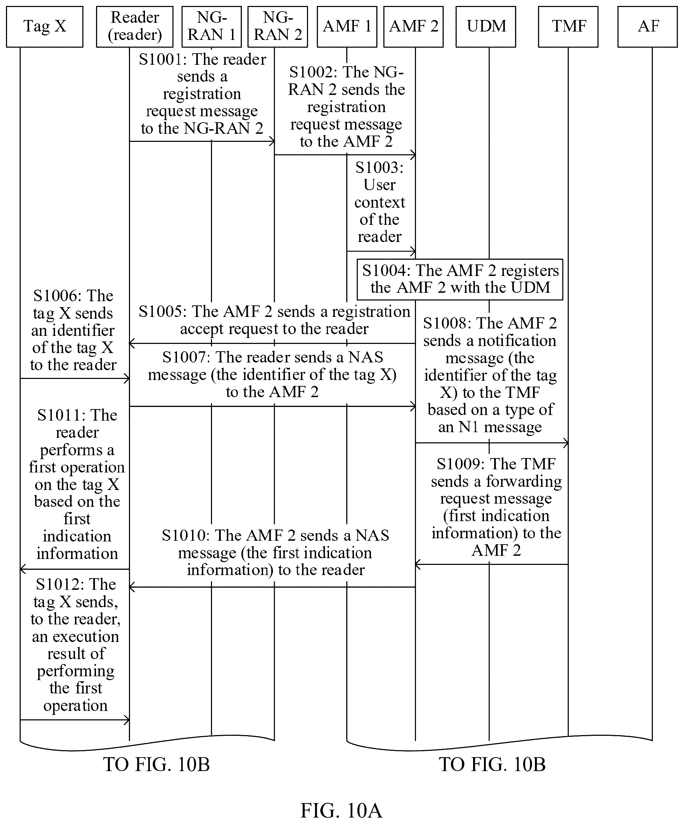

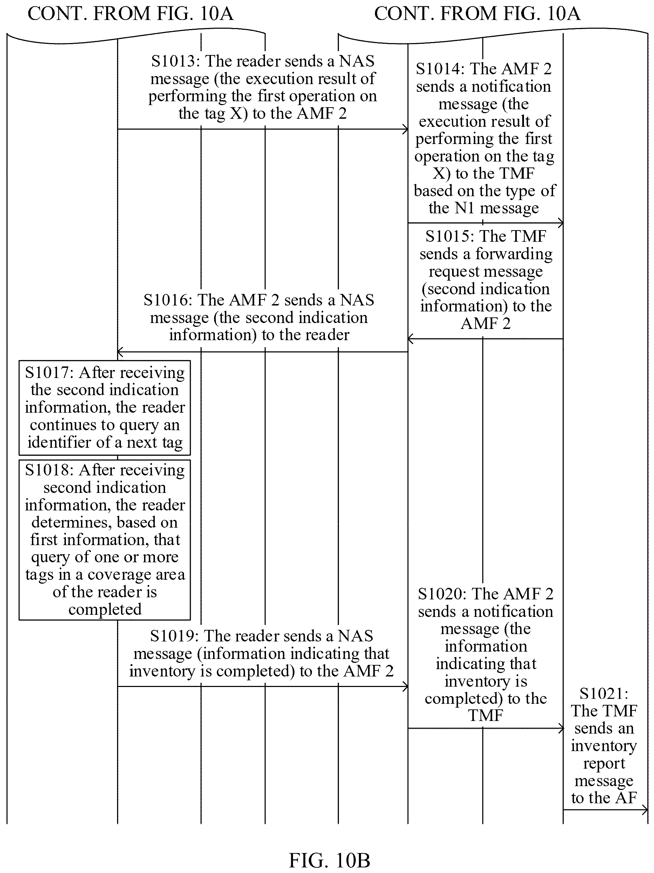

In addition, after S907, a location of the reader may move, and the reader is handed over from accessing an NG-RAN 1 to accessing an NG-RAN 2. FIG. 10A and FIG. 10B show a specific process 3 in which a reader performs inventory on a tag after the reader deregisters from an AMF 1 and registers with an AMF 2.

For S1001 to S1005, refer to S601 to S605.

S1006: A tag X sends an identifier of the tag X to the reader.

S1007: The reader sends a NAS message to the AMF 2.

For example, the NAS message includes an N1 message container and a type of an N1 message. The N1 message container includes the identifier of the tag X. The type of the N1 message is an inventory message type or an ambient device message type.

S1008: The AMF 2 sends a notification message to the TMF based on the type of the N1 message.

For example, the notification message includes the N1 message container, and the N1 message container includes the identifier of the tag X.

S1009: If the inventory request message received by the TMF in S903 further includes first indication information, the TMF sends a forwarding request message to the AMF 2, where the N1 message (namely, the NAS message) and an identifier (for example, an SUPI) of the reader are encapsulated in the forwarding request message. The N1 message includes the first indication information.

S1010: The AMF 2 sends a NAS message to the reader based on the identifier of the reader, where the NAS message includes the first indication information.

S1011: The reader performs a first operation on the tag X based on the first indication information.

S1012: The tag X sends, to the reader, an execution result of performing the first operation.

S1013: The reader sends a NAS message to the AMF 2.

For example, the NAS message includes an N1 message container and a type of an N1 message. The N1 message container includes the execution result of performing the first operation on the tag X. The type of the N1 message is an inventory message type or an ambient device message type.

S1014: The AMF 2 sends a notification message to the TMF based on the type of the N1 message.

For example, the notification message includes the N1 message container. The N1 message container includes the execution result of performing the first operation on the tag X.

S1015: The TMF sends a forwarding request message to the AMF 2.

For example, the N1 message (namely, the NAS message) and the identifier of the reader are encapsulated in the forwarding request message. The N1 message includes second indication information, and the second indication information indicates at least one of the following content: indicating to complete an operation on the tag X, indicating to query a next tag, or indicating to perform a random access procedure.

S1016: The AMF 2 sends a NAS message to the reader based on the identifier of the reader.

For example, the NAS message includes the second indication information.

S1017: After receiving the second indication information, the reader continues to query an identifier of a next tag.

S1018: After receiving second indication information, the reader determines, based on the first information, that query of one or more tags in a coverage area of the reader is completed (or inventory is completed).

S1019: The reader sends a NAS message to the AMF 2.

For example, the NAS message includes an N1 message container and a type of an N1 message. The N1 message container includes information indicating that inventory is completed, and the information indicating that the inventory is completed may indicate that for the current inventory initiated by an AF, the reader completes inventory on the tags that can be found through querying by the reader. The type of the N1 message is an inventory message type or an ambient device message type.

S1020: The AMF 2 sends a notification message to the TMF.

For example, the notification message includes the N1 message container, and the N1 message container includes the information indicating that the inventory is completed.

S1021: The TMF sends an inventory report message to the AF.

For example, the inventory report message includes an identifier of the one or more tags. Optionally, the inventory report message further includes an execution result of correspondingly performing the first operation on each of the identifier of the one or more tags.

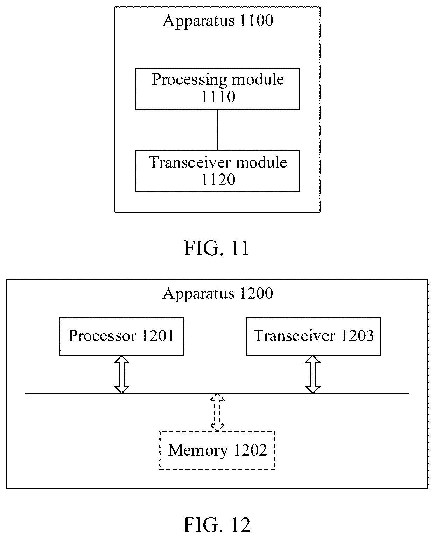

FIG. 11 is a block diagram of a possible example of a communication apparatus according to an embodiment of this application. The apparatus 1100 includes: a transceiver module 1120 and a processing module 1110. The transceiver module 1120 may include a receiving unit and a sending unit. The processing module 1110 is configured to control and manage an action of the apparatus 1100. The transceiver module 1120 is configured to support the apparatus 1100 in communicating with another network entity. Optionally, the apparatus 1100 may further include a storage unit, and the storage unit is configured to store program code and data of the apparatus 1100.

Optionally, the modules in the apparatus 1100 may be implemented by using software.

Optionally, the processing module 1110 may be a processor or a controller, for example, a general-purpose central processing unit (central processing unit, CPU), a general-purpose processor, a digital signal processor (digital signal processing, DSP), an application specific integrated circuit (application specific integrated circuit, ASIC), a field programmable gate array (field programmable gate array, FPGA), or another programmable logical device, a transistor logical device, a hardware component, or any combination thereof. The controller or the processor may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 1120 may be a communication interface, a transceiver, a transceiver circuit, or the like. The communication interface is a general term. During specific implementation, the communication interface may include a plurality of interfaces, and the storage unit may be a memory.

When the apparatus 1100 is a core network element or a chip in the core network element, the processing module 1110 in the apparatus 1100 may support the apparatus 1100 in performing actions of the core network element in the foregoing method examples, for example, may support the apparatus 1100 in performing step 400 in FIG. 4.

The transceiver module 1120 may support the apparatus 1100 in communicating with a first terminal device. For example, the transceiver module 1120 may support the apparatus 1100 in performing step 410 and step 420 in FIG. 4.

For example, the processing module 1110 invokes the transceiver module 1120 to perform the following actions: obtaining an identifier of a first terminal device and first information, where the first information is used to determine one or more second terminal devices on which an operation is to be performed, the first terminal device is configured to perform the operation on the second terminal device, and the second terminal device is an ambient device; sending the first information to the first terminal device; and receiving a result of performing the operation by the first terminal device based on the first information.

In a possible design, the transceiver module 1120 is configured to: when receiving the result of performing the operation by the first terminal device based on the first information, receive identifiers that are of a part or all of the one or more second terminal devices and that are sent by the first terminal device.

In a possible design, the transceiver module 1120 is configured to: further obtain first indication information, where the first indication information indicates to perform a first operation on the second terminal device; send the first indication information to the first terminal device; and receive an execution result that is of performing the first operation on the part or all of the one or more second terminal devices and that is sent by the first terminal device.

In a possible design, the transceiver module 1120 is configured to receive an identifier that is of a third terminal device and that is sent by the first terminal device, where the third terminal device belongs to the one or more second terminal devices; and send second indication information to the first terminal device, where the second indication information indicates at least one of the following content: indicating to complete an operation on the third terminal device, indicating to query a next second terminal device, or indicating to perform a random access procedure.

In a possible design, the transceiver module 1120 is configured to further obtain first indication information, where the first indication information indicates to perform a first operation on the second terminal device; before sending the second indication information to the first terminal device, send third indication information to the first terminal device, where the third indication information indicates to perform a first operation on the third terminal device; and receive an execution result that is of performing the first operation on the third terminal device and that is sent by the first terminal device.

In a possible design, the core network element is a device management network element. The processing module 1110 is configured to: when sending the first information to the first terminal device, determine a first access and mobility management network element based on the identifier of the first terminal device, where the first terminal device registers with the first access and mobility management network element.

The transceiver module 1120 is configured to send the first information to the first terminal device through the first access and mobility management network element.

In a possible design, the transceiver module 1120 is configured to send a subscription request message to the first access and mobility management network element, where the subscription request message is used to subscribe to the result of performing the operation by the first terminal device based on the first information.

In a possible design, the transceiver module 1120 is configured to: when receiving the result of performing the operation by the first terminal device based on the first information, receive a first notification message from the first access and mobility management network element, where the first notification message responds to the subscription request message, and the first notification message includes the result.

In a possible design, the core network element is a first access and mobility management network element, and the first terminal device registers with the first access and mobility management network element.

In a possible design, the first terminal device deregisters from the first access and mobility management network element, and registers with a second access and mobility management network element.

The transceiver module 1120 is configured to send the first information to the second access and mobility management network element after sending the first information to the first terminal device.

In a possible design, the first operation is any one or more of the following: a read operation, a write operation, an access operation, a kill operation, a lock operation, a block write operation, or a block erase operation.

It should be understood that the apparatus 1100 according to this embodiment of this application may correspond to the core network element in the foregoing method embodiments, and operations and/or functions of the modules in the apparatus 1100 are separately used to implement corresponding steps of the method performed by the core network element in the foregoing method embodiments. Therefore, the beneficial effects in the foregoing method embodiments can also be implemented. For brevity, details are not described herein again.

When the apparatus 1100 is a first terminal device or a chip in the first terminal device, the processing module 1110 in the apparatus 1100 may support the apparatus 1100 in performing actions of the core network element in the foregoing method examples. The transceiver module 1120 may support the apparatus 1100 in communicating with the core network element. For example, the transceiver module 1120 may support the apparatus 1100 in performing step 410 and step 420 in FIG. 4.

For example, the transceiver module 1120 is configured to receive first information from a core network element, where the first information is used to determine one or more second terminal devices on which an operation is to be performed, the first terminal device is configured to perform the operation on the second terminal device, and the second terminal device is an ambient device.

The processing module 1110 is configured to determine, based on the first information, a result of performing the operation on the second terminal device.

The transceiver module 1120 is configured to send the result to the core network element.

In a possible design, the transceiver module 1120 is configured to: when sending the result to the core network element, send identifiers of a part or all of the one or more second terminal devices to the core network element.

In a possible design, the transceiver module 1120 is configured to receive first indication information from the core network element, where the first indication information indicates to perform a first operation on the second terminal device.

The processing module 1110 is configured to perform the first operation on the part or all of the one or more second terminal devices based on the first indication information.

In a possible design, the transceiver module 1120 is configured to: when sending the result to the core network element, send, to the core network element, an execution result of performing the first operation on the part or all of the one or more second terminal devices.

In a possible design, the transceiver module 1120 is configured to: when sending the result to the core network element, send an identifier of a third terminal device to the core network element, where the third terminal device belongs to the one or more second terminal devices; and receive second indication information from the core network element, where the second indication information indicates at least one of the following content: indicating to complete an operation on the third terminal device, indicating to query a next second terminal device, or indicating to perform a random access procedure.

In a possible design, the transceiver module 1120 is configured to: before receiving the second indication information from the core network element, receive third indication information from the core network element, where the third indication information indicates to perform a first operation on the third terminal device; and send, to the core network element, an execution result of performing the first operation on the third terminal device.

In a possible design, the core network element is a device management network element.

The transceiver module 1120 is configured to: when receiving the first information from the core network element, receive the first information from the device management network element through a first access and mobility management network element, where the first terminal device registers with the first access and mobility management network element.

In a possible design, the core network element is a first access and mobility management network element, and the first terminal device registers with the first access and mobility management network element.

In a possible design, the first terminal device deregisters from the first access and mobility management network element, and registers with a second access and mobility management network element.

The transceiver module 1120 is configured to send the result to the second access and mobility management network element.

In a possible design, the first operation is any one or more of the following: a read operation, a write operation, an access operation, a kill operation, a lock operation, a block write operation, or a block erase operation.

It should be understood that the apparatus 1100 according to this embodiment of this application may correspond to the first terminal device in the foregoing method embodiments, and operations and/or functions of the modules in the apparatus 1100 are separately used to implement corresponding steps of the method performed by the first terminal device in the foregoing method embodiments. Therefore, the beneficial effects in the foregoing method embodiments can also be implemented. For brevity, details are not described herein again.

FIG. 12 is a diagram of a structure of a communication apparatus 1200 according to an embodiment of this application. As shown in FIG. 12, the apparatus 1200 includes: a processor 1201.

When the apparatus 1200 is a core network element or a chip in the core network element, in a possible implementation, the processor 1201 is configured to invoke an interface to perform the following actions:
obtaining an identifier of a first terminal device and first information, where the first information is used to determine one or more second terminal devices on which an operation is to be performed, the first terminal device is configured to perform the operation on the second terminal device, and the second terminal device is an ambient device; sending the first information to the first terminal device; and receiving a result of performing the operation by the first terminal device based on the first information.

It should be understood that the apparatus 1200 may be further configured to perform other steps and/or operations on a core network element side in the foregoing embodiments. For brevity, details are not described herein.

When the apparatus 1200 is a first terminal device or a chip in the first terminal device, in a possible implementation, the processor 1201 is configured to invoke an interface to perform the following actions:
receiving first information from a core network element, where the first information is used to determine one or more second terminal devices on which an operation is to be performed, the first terminal device is configured to perform the operation on the second terminal device, and the second terminal device is an ambient device; determining, based on the first information, a result of performing the operation on the second terminal device; and sending the result to the core network element.

It should be understood that the apparatus 1200 may be further configured to perform other steps and/or operations on a first terminal device side in the foregoing embodiments. For brevity, details are not described herein.

It should be understood that the processor 1201 may invoke the interface to perform the foregoing receiving and sending actions. The invoked interface may be a logical interface or a physical interface. This is not limited. Optionally, the physical interface may be implemented by using a transceiver. Optionally, the apparatus 1200 further includes a transceiver 1203.

Optionally, the apparatus 1200 further includes a memory 1202, and the memory 1202 may store program code in the foregoing method embodiments, so that the processor 1201 invokes the program code.

Specifically, if the apparatus 1200 includes the processor 1201, the memory 1202, and the transceiver 1203, the processor 1201, the memory 1202, and the transceiver 1203 communicate with each other through an inner connection path, to perform transmission of a control signal and/or a data signal. In a possible design, the processor 1201, the memory 1202, and the transceiver 1203 may be implemented by using a chip. The processor 1201, the memory 1202, and the transceiver 1203 may be implemented in a same chip, or may be separately implemented in different chips, or functions of any two of the following are implemented in one chip: the processor 1201, the memory 1202, and the transceiver 1203. The memory 1202 may store program code, and the processor 1201 invokes the program code stored in the memory 1202, to implement a corresponding function of the apparatus 1200.

The methods disclosed in embodiments of this application may be applied to a processor or may be implemented by a processor. The processor may be an integrated circuit chip and has a signal processing capability. In an implementation process, steps in the foregoing method embodiments may be implemented by using a hardware integrated logic circuit in the processor, or by using instructions in a form of software. The foregoing processor may be a general-purpose processor, a digital signal processor (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware assembly, or may be a system on chip (system on chip, SoC), or may be a central processing unit (central processing unit, CPU), or may be a network processor (network processor, NP), or may be a digital signal processing circuit (digital signal processor, DSP), or may be a micro controller (micro controller unit, MCU), or may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. Steps of the methods disclosed with reference to embodiments of this application may be directly performed by a hardware decoding processor, or may be performed by using a combination of hardware and software modules in the decoding processor. A software module may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitation, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, and may be located at one location, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a computer software product. The software product is stored in a storage medium, and includes several instructions for instructing a computer device (which may be a personal computer, a server, or a network device) to perform all or some of the steps of the methods described in embodiments of this application. The foregoing storage medium includes: any medium that can store program code, such as a USB flash drive, a removable hard disk, a read-only memory ROM, a random access memory RAM, a magnetic disk, or an optical disc.

## Claims

1. An inventory method, wherein the method comprises:
obtaining, by a core network element, an identifier of a first terminal device and first information, wherein the first information is used to determine one or more second terminal devices on which an operation is to be performed, the first terminal device is configured to perform the operation on the second terminal device, and the second terminal device is an ambient device;
sending, by the core network element, the first information to the first terminal device; and
receiving, by the core network element, a result of performing the operation by the first terminal device based on the first information.

2. The method according to claim 1, wherein the receiving, by the core network element, a result of performing the operation by the first terminal device based on the first information comprises:
receiving, by the core network element, identifiers that are of a part or all of the one or more second terminal devices and that are sent by the first terminal device.

3. The method according to claim 2, further comprising:
further obtaining, by the core network element, first indication information, wherein the first indication information indicates to perform a first operation on the second terminal device;
sending, by the core network element, the first indication information to the first terminal device; and
receiving, by the core network element, an execution result that is of performing the first operation on the part or all of the one or more second terminal devices and that is sent by the first terminal device.

4. The method according to claim 2, wherein the core network element receives an identifier that is of a third terminal device and that is sent by the first terminal device, wherein the third terminal device belongs to the one or more second terminal devices; and
the method further comprises:
sending, by the core network element, second indication information to the first terminal device, wherein the second indication information indicates at least one of the following content: indicating to complete an operation on the third terminal device, indicating to query a next second terminal device, or indicating to perform a random access procedure.

5. The method according to claim 4, wherein the method further comprises:
further obtaining, by the core network element, first indication information, wherein the first indication information indicates to perform a first operation on the second terminal device; and
before the sending, by the core network element, second indication information to the first terminal device, the method further comprises:
sending, by the core network element, third indication information to the first terminal device, wherein the third indication information indicates to perform the first operation on the third terminal device; and
receiving, by the core network element, an execution result that is of performing the first operation on the third terminal device and that is sent by the first terminal device.

6. The method according to any one of claims 1 to 5, wherein the core network element is a device management network element; and
the sending, by the core network element, the first information to the first terminal device comprises:
determining, by the device management network element, a first access and mobility management network element based on the identifier of the first terminal device, wherein the first terminal device registers with the first access and mobility management network element; and
sending, by the device management network element, the first information to the first terminal device through the first access and mobility management network element.

7. The method according to claim 6, further comprising:
sending, by the device management network element, a subscription request message to the first access and mobility management network element, wherein the subscription request message is used to subscribe to the result of performing the operation by the first terminal device based on the first information.

8. The method according to claim 6, wherein the receiving, by the core network element, a result of performing the operation by the first terminal device based on the first information comprises:
receiving, by the device management network element, a first notification message from the first access and mobility management network element, wherein the first notification message responds to the subscription request message, and the first notification message comprises the result.

9. The method according to any one of claims 1 to 5, wherein the core network element is a first access and mobility management network element, and the first terminal device registers with the first access and mobility management network element.

10. The method according to claim 9, wherein the first terminal device deregisters from the first access and mobility management network element, and registers with a second access and mobility management network element; and
after the sending, by the core network element, the first information to the first terminal device, the method comprises:
sending, by the first access and mobility management network element, the first information to the second access and mobility management network element.

11. The method according to claim 10, wherein the method further comprises:
receiving, by the second access and mobility management network element, the result that is of performing the operation based on the first information and that is sent by the first terminal device.

12. The method according to claim 3 or 5, wherein the first operation is any one or more of the following: a read operation, a write operation, an access operation, a kill operation, a lock operation, a block write operation, or a block erase operation.

13. An inventory method, wherein the method comprises:
receiving, by a first terminal device, first information from a core network element, wherein the first information is used to determine one or more second terminal devices on which an operation is to be performed, the first terminal device is configured to perform the operation on the second terminal device, and the second terminal device is an ambient device;
determining, by the first terminal device based on the first information, a result of performing the operation on the second terminal device; and
sending, by the first terminal device, the result to the core network element.

14. The method according to claim 13, wherein the sending, by the first terminal device, the result to the core network element comprises:
sending, by the first terminal device, identifiers of a part or all of the one or more second terminal devices to the core network element.

15. The method according to claim 14, wherein the method further comprises:
receiving, by the first terminal device, first indication information from the core network element, wherein the first indication information indicates to perform a first operation on the second terminal device;
the method further comprises:
performing, by the first terminal device, the first operation on the part or all of the one or more second terminal devices based on the first indication information; and
the sending, by the first terminal device, the result to the core network element comprises:
sending, by the first terminal device to the core network element, an execution result of performing the first operation on the part or all of the one or more second terminal devices.

16. The method according to claim 14, wherein the sending, by the first terminal device, the result to the core network element comprises:
sending, by the first terminal device, an identifier of a third terminal device to the core network element, wherein the third terminal device belongs to the one or more second terminal devices; and
the method further comprises:
receiving, by the first terminal device, second indication information from the core network element, wherein the second indication information indicates at least one of the following content: indicating to complete an operation on the third terminal device, indicating to query a next second terminal device, or indicating to perform a random access procedure.

17. The method according to claim 16, wherein before the receiving, by the first terminal device, second indication information from the core network element, the method further comprises:
receiving, by the first terminal device, third indication information from the core network element, wherein the third indication information indicates to perform a first operation on the third terminal device; and
sending, by the first terminal device to the core network element, an execution result of performing the first operation on the third terminal device.

18. The method according to any one of claims 13 to 17, wherein the core network element is a device management network element; and
the receiving, by the first terminal device, the first information from the core network element comprises:
receiving, by the first terminal device, the first information from the device management network element through a first access and mobility management network element, wherein the first terminal device registers with the first access and mobility management network element.

19. The method according to any one of claims 13 to 17, wherein the core network element is a first access and mobility management network element, and the first terminal device registers with the first access and mobility management network element.

20. The method according to claim 19, wherein the first terminal device deregisters from the first access and mobility management network element, and registers with a second access and mobility management network element; and
the method further comprises:
sending, by the first terminal device, the result to the second access and mobility management network element.

21. The method according to claim 15 or 17, wherein the first operation is any one or more of the following: a read operation, a write operation, an access operation, a kill operation, a lock operation, a block write operation, or a block erase operation.

22. A communication apparatus, wherein the apparatus comprises one or more functional units, and the one or more functional units are configured to perform the method according to any one of claims 1 to 12 or the method according to any one of claims 13 to 21.

23. A communication apparatus, comprising a processor, wherein the processor is coupled to a memory; and
the processor is configured to execute computer instructions stored in the memory, to enable the communication apparatus to perform the method according to any one of claims 1 to 12 or the method according to any one of claims 13 to 21.

24. A computer-readable storage medium, wherein the storage medium stores a computer program or instructions, and when the computer program or the instructions are executed by a communication apparatus, the method according to any one of claims 1 to 12 or the method according to any one of claims 13 to 21 is implemented.
